# EUROPÄISCHE PATENTSCHRIFT

(11) **EP 3 595 954 B1**
(45) Veröffentlichungstag und Bekanntmachung des Hinweises auf die Patenterteilung: **20.10.2021**
(21) Anmeldenummer: 18711089.5
(22) Anmeldetag: 12.03.2018
(51) Int. Cl.: B61C 9/50, F16H 57/04

(54) **GETRIEBE, INSBESONDERE FÜR ANTRIEBSSTRANG VON SCHIENENFAHRZEUGEN**
TRANSMISSION, IN PARTICULAR FOR THE POWERTRAIN OF RAIL VEHICLES
TRANSMISSION, EN PARTICULIER POUR LA CHAÎNE CINÉMATIQUE DE VÉHICULES FERROVIAIRES

(30) Priorität: 16.03.2017 DE 102017204451
(43) Veröffentlichungstag der Anmeldung: 22.01.2020
(73) Patentinhaber: Bombardier Transportation GmbH, 10785 Berlin (DE)
(72) Erfinder: SEMERAD, Horst, 2340 Mödling (AT)
(74) Vertreter: Patentanwälte Bressel und Partner mbB
(86) Internationale Anmeldenummer: PCT/EP2018/056127
(87) Internationale Veröffentlichungsnummer: WO 2018/166992

(56) Entgegenhaltungen:
- WO-A1-2009/095150
- DD-A1- 82 247
- DE-A1- 2 164 534
- DE-A1- 4 111 576
- DE-A1-102007 034 085
- JP-A- 2007 315 568
- US-A1- 2015 104 127

## Beschreibung

Die Erfindung betrifft ein Getriebe, das insbesondere im Antriebsstrang von Schienenfahrzeugen verwendet werden kann. Ferner betrifft die Erfindung ein Schienenfahrzeug mit einem Getriebe und ein Verfahren zum Herstellen eines Getriebes. So ein Getriebe ist aus der DE2164534A bekannt Schienenfahrzeuge, insbesondere solche, deren Antrieb nicht über Radnabenmotoren erfolgt, weisen zur Übertragung der Antriebsleistung von einem Motor auf mindestens ein angetriebenes Rad oder mindestens eine angetriebene Achse ein Getriebe auf.

Die Erfindung betrifft insbesondere Getriebe mit Tauchschmierung, d.h. eine von einer Ölpumpe angetriebene Druck-Umlaufschmierung ist nicht vorhanden. Stattdessen sind typischerweise mehrere Sammelbereiche (Fangtaschen) für Öl bzw. Schmiermittel vorhanden, in denen das Schmiermittel gesammelt wird, um dann zu den zu schmierenden beweglichen Teilen geführt zu werden. Diese Sammelbereiche sind in axialer Richtung, d.h. in einer Richtung parallel einer Drehachse eines rotierbaren Teils des Getriebes, voneinander beabstandet und/oder ein großer Sammelbereich versorgt in der axialen Richtung voneinander beabstandete zu schmierende Teile mit Schmiermittel. Wenn nur kleiner Bauraum für das Getriebe zur Verfügung steht, können solche Ausgestaltungen unter Umständen nicht realisiert werden. Wenn der Bauraum um den Sammelbereich klein ist, liegt der Sammelbereich bezogen auf ein Zahnrad des Getriebes oder liegt zumindest die Schmiermittel-Zuführung zu den Drehlagern des Zahnrades betrachtet in axialer Richtung auf einer Seite des Zahnrades. Es besteht somit die Schwierigkeit, auch ein auf der in axialer Richtung gegenüberliegenden Seite angeordnetes Drehlager des Zahnrades zu schmieren. Für andere rotierbare Teile gilt entsprechendes.

DE 10 2007 034 085 A1 beschreibt ein Getriebe für ein Fahrzeug, insbesondere Kraftfahrzeug, mit einer hohlen Welle und einer darin verlaufenden Dehnschraube zum axialen Verspannen von Getriebeelementen auf der Welle. Die Dehnschraube weist einen hohlen Schaft mit Öffnungen auf zum radialen Ableiten von Öl aus dem Inneren der Dehnschraube in die hohle Welle hinein. Ein Wellenabsatz der Welle trägt den Innenring eines ersten Kegelrollenlagers, welches die Welle gemeinsam mit einem zweiten Kegelrollenlager in einer angestellten X-Anordnung in einem Gehäuse des Fahrzeuggetriebes lagert.

WO 2009/095150 A1 beschreibt eine längenverstellbare Welle, umfassend ein äußeres und ein inneres Axialteil, die teleskopartig miteinander zusammenarbeiten. Der Erfindung liegt die Aufgabe zugrunde, ein Getriebe, insbesondere für ein Schienenfahrzeug, in konstruktiver Hinsicht einfach sowie platzsparend auszuführen.

Gemäß der vorliegenden Erfindung wird ein Getriebe mit den Merkmalen des Anspruchs 1 und ein Verfahren mit den Merkmalen des Anspruchs 11 vorgeschlagen. Innerhalb eines rotierbaren Teils (insbesondere eines Zahnrades) des Getriebes ist mindestens einen Kanal für Schmiermittel (insbesondere Öl) vorzusehen, der einen Längsabschnitts aufweist. Betrachtet in der Durchflussrichtung für das Schmiermittel entfernt sich der Kanal zumindest in dem Längsabschnitt von der Drehachse des rotierbaren Teils.

Auf diese Weise unterstützt die Rotation des rotierbaren Teils die Strömung des Schmiermittels in der Durchflussrichtung, denn die Zentrifugalkraft, welcher das Schmiermittel in dem Längsabschnitts des Kanals während der Rotation ausgesetzt ist, hat eine Kraftkomponente, die in die Durchflussrichtung ausgerichtet ist. Das rotierbare Teil kann insbesondere ein Zahnrad sein, alternativ aber eine Welle, eine Schnecke oder ein Schneckenrad, ein Planetenträger, ein Gehäuseteil oder eine Kupplungsvorrichtung sein.

Wie erwähnt weist das rotierbare Teil in seinem Inneren mindestens einen Kanal der beschriebenen Art auf. Während eines Betriebs des Getriebes gelangt Schmiermittel in den Längsabschnitt des Kanals und sein Transport durch den Kanal wird von der Rotation des rotierbaren Teils unterstützt. Typischerweise haben rotierbare Teile an verschiedenen axialen Positionen in Bezug auf ihre Drehachse jeweils ein Drehlager zum Lagern des rotierbaren Teils während der Drehbewegung. Durch den zumindest einen Kanal kann daher Schmiermittel zu einem Drehlager transportiert werden, das aus Sicht einer Schmiermittel-Zuführung, die an einer ersten axialen Position liegt, an einer entfernten zweiten axialen Position liegt. Es ist somit ein Schmiermitteltransport durch das rotierbare Teil hindurch zu einem Drehlager möglich und es kann insbesondere bei Vorhandensein lediglich eines Schmiermittel-Sammelbereichs oder mehrerer nahe beieinander liegender Sammelbereiche auf einfache Weise und insbesondere ohne Druck-Umlaufschmierung eine Schmierung mehrerer Drehlager des rotierbaren Teils erzielt werden.

Mit zunehmender Drehzahl der Drehbewegung des rotierenden Teils nimmt die von der Zentrifugalkraft bewirkte Unterstützung der Schmiermittelförderung durch den Kanal zu, d.h. die Durchflussrate wird erhöht. Dies ist deshalb von Vorteil, weil sich bei einer passiven Schmierung ohne Förderpumpe auch mehr Schmiermittel pro Zeitintervall in dem zumindest einen dafür vorgesehenen Sammelbereich sammelt, von dem aus der Kanal und die durch den Kanal hindurch mit Schmiermittel zu versorgenden Teile mit Schmiermittel gespeist werden.

Ausgestaltungen des Verfahrens entsprechen Ausgestaltungen des Getriebes, die in dieser Beschreibung beschrieben sind. Ferner gehört zum Umfang der Erfindung ein Schienenfahrzeug, das das Getriebe in einer seiner Ausgestaltungen, die in dieser Beschreibung beschrieben sind, aufweist. Insbesondere ist das Getriebe in einem Antriebsstrang des Schienenfahrzeugs verbaut.

Insbesondere kann es sich bei dem rotierbaren Teil um ein Zahnrad handeln, wobei der zumindest eine Kanal näher an der Drehachse verläuft als eine Außenverzahnung, die während des Getriebes mit einer Verzahnung eines anderen Zahnrad kämmt. Das durch den Kanal hindurchtretende Schmiermittel hat daher einen kühlenden Effekt und kann insbesondere Wärme aufgrund von Reibung der Außenverzahnung an der Verzahnung des anderen Zahnrades abtransportieren.

Insbesondere kann der Kanal einen über seine gesamte Länge konstanten kreisförmigen oder elliptischen Querschnitt haben. Wenn der Querschnitt senkrecht zum Verlauf des geradlinig verlaufenden Kanals betrachtet wird, und daher nicht senkrecht zur Drehachse betrachtet wird, ist der Querschnitt des Kanals vorzugsweise kreisförmig. Insbesondere kann der zumindest eine Kanal durch zumindest eine Bohrung gebildet sein/werden. Vorteilhaft sind hierbei die einfache Fertigung und die effiziente Nutzung des Transporteffekts des Schmiermittels aufgrund der Wirkung der Zentrifugalkraft, die entlang der gesamten Länge des rotierbaren Teils wirkt.

Der Längsabschnitt kann der gesamte Kanal sein, d.h. der Längsabschnitt, in dessen Verlauf in Richtung der Austrittsöffnung sich der äußere Rand weiter von der Drehachse entfernt, erstreckt sich von der Eintrittsöffnung bis zur Austrittsöffnung.

Insbesondere kann sich der äußere Rand im Verlauf des Längsabschnitts in Richtung der Austrittsöffnung in keinem Teil des Längsabschnitts wieder der Drehachse annähern. Vorteilhaft ist dies, weil die Zentrifugalkraft in keinem Teilabschnitt des Kanals dem Transport des Schmiermittels in Richtung der Austrittsöffnung entgegenwirkt. Bevorzugt wird, dass sich der äußere Rand im Verlauf des Längsabschnitts in Richtung der Austrittsöffnung kontinuierlich (insbesondere linear) weiter von der Drehachse entfernt. In diesem Fall unterstützt die Zentrifugalkraft während der Rotation des rotierbaren Teils den Schmiermittelfluss kontinuierlich über den gesamten Verlauf des Längsabschnitts.

Der Kanal kann eine Mehrzahl der Längsabschnitte aufweisen, deren äußerer Rand sich in ihrem Verlauf in Richtung der Austrittsöffnung weiter von der Drehachse entfernt, wobei zwei dieser Längsabschnitte durch einen weiteren Längsabschnitt voneinander getrennt sind, in dem sich der äußere Rand im Verlauf des weiteren Längsabschnitts nicht von der Drehachse weiter entfernt und optional sogar sich der Drehachse annähert.

Allgemein formuliert kann der zumindest eine Kanal außer dem Längsabschnitt, dessen äußerer Rand sich im Verlauf in Richtung der Austrittsöffnung weiter von der Drehachse entfernt, mindestens einen weiteren Längsabschnitt aufweisen, der hinsichtlich des Abstands zur Drehachse beliebig gestaltet sein kann.

Insbesondere liegt aber der äußere Rand des Kanals an der Eintrittsöffnung näher an der Drehachse als an der Austrittsöffnung. Dabei ist es auch möglich, dass die Drehachse des rotierbaren Teils die Eintrittsöffnung durchquert. Es werden jedoch noch Ausführungsformen beschrieben, bei denen der innere Rand des Kanals an der Eintrittsöffnung einen Abstand zur Drehachse hat.

Während des Betriebes des Getriebes kann durch den Kanal Schmiermittel transportiert werden und danach zur Schmierung einer Vorrichtung verwendet werden. Das Schmiermittel kann ausgehend von der Austrittsöffnung des Kanals über zumindest eine weitere Leitung oder (gemäß den Ansprüchen) einen Freiraum zu der zu schmierenden Vorrichtung gelangen. Die zu schmierende Vorrichtung kann insbesondere ein Drehlager sein, vorzugsweise ein Drehlager des rotierbaren Teils. Das Drehlager kann insbesondere ein Wälzlager oder ein Gleitlager sein.

Allgemeiner formuliert weist das Getriebe ein Drehlager zum Lagern des rotierbaren Teils auf. Insbesondere kann ein Freiraum vorgesehen sein, der sich von der Austrittsöffnung des Kanals zu dem Drehlager erstreckt. Auf diese Weise kann Schmiermittel von der Austrittsöffnung durch den Freiraum hindurch zu dem Drehlager gelangen und das Drehlager schmieren.

Insbesondere kann die Austrittsöffnung in radialer Richtung näher an der Drehachse angeordnet sein als ein zu schmierender Bereich des Drehlagers, wobei sich der Freiraum ausgehend von der Austrittsöffnung weg von der Drehachse in Richtung des Drehlagers erstreckt. Insbesondere wenn ein Rand des Freiraums von einer Außenoberfläche des rotierbaren Teils gebildet wird, kann Schmiermittel von der Austrittsöffnung an der Außenoberfläche entlang zu dem zu schmierenden Bereich des Drehlagers gelangen. In diesem Fall unterstützt die Zentrifugalkraft auch den Transport des Schmiermittels durch den Freiraum.

Der Freiraum kann sich umlaufend, ausgehend von der Austrittsöffnung weg von der Drehachse in Richtung des Drehlagers erstrecken, sodass das Drehlager über seine gesamte Erstreckung in Umlaufrichtung um die Drehachse von Schmiermittel erreicht werden kann. Hierbei kann wie erwähnt ein durch die Zentrifugalkraft verursachter, weiterer Transporteffekt von der Austrittsöffnung hin zum Drehlager genutzt werden, wenn entsprechende rotierende Oberflächen vorhanden sind.

An dem Drehlager oder der anderen zu schmierenden Vorrichtung sind aufgrund des Schmiermitteltransports durch den zumindest einen Kanal keine weiteren Maßnahmen zur Schmiermittelzufuhr erforderlich. Es wird daher lediglich ein kleiner Bauraum für Schmiermittel-Sammelbereiche benötigt. Dies wiederum führt zu einer Verringerung des Fertigungs- und Materialaufwands und so zu einer Kostenersparnis. Insbesondere kann auf eine Mehrzahl von Schmiermittel-Sammelbereichen verzichtet werden. Ein einziger Schmiermittel-Sammelbereich reicht aus, um zu schmierende Vorrichtungen an gegenüberliegenden axialen Enden des rotierbaren Teils mit Schmiermittel zu versorgen.

Der zumindest eine Kanal verläuft gemäß den Ansprüchen von einer ersten radialen Stirnfläche bis zu einer zweiten, in axialer Richtung der ersten Stirnfläche gegenüberliegenden radialen Stirnfläche des rotierbaren Teils, wobei sich die Eintrittsöffnung an der ersten Stirnfläche und die Austrittsöffnung an der zweiten Stirnfläche befindet. Die Stirnflächen können insbesondere Randflächen des rotierbaren Teils sein, die an axial einander gegenüberliegenden Seiten des rotierbaren Teils angeordnet sind. Vorteilhaft ist, dass hierdurch ein Schmiermitteltransport durch das gesamte rotierbare Teil hindurch möglich ist und während der Rotation des rotierbaren Teils von der Zentrifugalkraft unterstützt wird. Insbesondere kann zumindest eine der Stirnflächen orthogonal zur Drehachse verlaufen.

Neben der Ausgestaltung, in der sich in dem rotierbaren Teil ein einziger Kanal befindet, sind auch vorteilhafte Ausgestaltungen mit einer Mehrzahl von Kanälen möglich. Durch die Mehrzahl von Kanälen kann die Schmiermittelförderrate im Vergleich zur Ausgestaltung, bei der nur ein einziger Kanal vorliegt, erhöht werden. Wenn das rotierbare Teil nicht oder langsam rotiert, findet im Fall einer Mehrzahl der Kanäle ein Schmiermitteltransport mit größerer Wahrscheinlichkeit statt als bei einem einzigen Kanal, denn die Gewichtskräfte des Schmiermittels können den Transport innerhalb des Längsabschnitts bewirken, sobald die Eintrittsöffnung mindestens eines Kanals unterhalb der Horizontalen liegt, die durch die Drehachse verläuft und zu ihr senkrecht steht.

Die Mehrzahl der Kanäle kann in einer Weise in dem rotierbaren Teil angeordnet sein, dass die radialen Abstände aller äußeren Ränder aller Kanäle zur Drehachse des rotierbaren Teils in allen senkrecht zur Drehachse verlaufenden Querschnitten des rotierbaren Teils gleich groß sind. Dies ist vorteilhaft, da dann eine Unwucht des rotierbaren Teils im Betrieb vermieden wird, sofern die Abstände zwischen den einzelnen Kanälen in Umlaufrichtung gleich sind. Dabei können die Kanäle in allen zur Drehachse senkrechten Querschnitten des rotierbaren Teils in Umlaufrichtung übereinstimmende Querschnitte haben, also jeweils die gleiche Form und jeweils die gleiche Ausrichtung in Bezug auf die Drehachse des rotierbaren Teils aufweisen. Auch andere Anordnungen und Gestaltungen der Kanäle sind möglich, wobei es bevorzugt wird, dass die Kanäle in einem Betrieb des rotierbaren Teils keine Unwucht oder eine Wucht kleiner als ein vorgegebener Maximalwert auslösen. Z. B. könnte eine solche Anordnung einen Kanal mit größerem Querschnitt auf der einen Seite der Drehachse innerhalb des rotierbaren Teils und zwei oder mehrere Kanäle mit kleinerem Querschnitt auf der anderen Seite der Drehachse innerhalb des rotierbaren Teils (z. B. nebeneinander verlaufend) aufweisen.

Zum Zwecke der Versorgung des Kanals mit Schmiermittel weist das Getriebe einen ortsfesten Schmiermittelzulauf auf, der zu einem Hohlraum führt, wobei der Hohlraum in Flussrichtung des Schmiermittels unmittelbar vor der Eintrittsöffnung des Kanals angeordnet ist. Der Schmiermittelzulauf kann mindestens eine Auslauföffnung aufweisen, durch die das Schmiermittel während des Betriebes vom Schmiermittelzulauf in den Hohlraum gelangt. Die Auslauföffnung kann von der Drehachse durchstoßen werden, z. B. zentrisch. Der Schmiermittelzulauf kann nahe des Hohlraums als zentrische Zulaufleitung ausgeführt sein. Dies hat den Vorteil, dass eine gleichmäßige Verteilung des Schmiermittels innerhalb des Hohlraums in die Richtungen, die senkrecht zur Eintrittsrichtung des Schmiermittels verlaufen, erreicht wird, sobald das Schmiermittel auf eine der Auslauföffnung gegenüberliegende Wand des Hohlraums trifft.

Der Schmiermittelzulauf kann mit Schmiermittel aus zumindest einem Sammelbereich, insbesondere aus zumindest einer Schmiermittelfangtasche, oberhalb des Schmiermittelzulaufs gespeist werden.

Gemäß den Patentansprüchen weist das Getriebe ein Gehäuse mit einem Gehäusedeckel auf, wobei sich zumindest ein Abschnitt des Schmiermittelzulaufs im Inneren des Gehäusedeckels oder entlang einer in das Getriebeinnere weisenden inneren Oberfläche erstreckt. Dies bedeutet geringen Aufwand für die Herstellung des Schmiermittelzulaufs und ermöglicht dessen Reinigung auf einfache Weise.

Der Hohlraum kann ganz oder zum Teil durch das rotierbare Teil begrenzt werden oder sich an oder in ihm befinden. Insbesondere kann eine Außenwand, die eine Außenumfangsfläche des Hohlraums bildet, während einer Drehung des rotierbaren Teils um die Drehachse mitrotieren.

In allen Fällen kann mindestens eine Außenwand des Hohlraums mit dem rotierbaren Teil mitrotieren, wodurch bereits innerhalb des Hohlraums eine Förderung und u. U. auch eine Verteilung des Schmiermittels bewirkt werden kann, wenn die mindestens eine Außenwand weg von der Drehachse verläuft. Anders formuliert kann der Hohlraum mindestens einen radial nach außen verlaufenden Bereich aufweisen, der zu der Eintrittsöffnung des Kanals führt.

Schmiermittel innerhalb des Hohlraums, das die mindestens eine Außenwand benetzt, wird aufgrund der Zentrifugalkraft weg von der Drehachse gefördert. Die Eintrittsöffnung des Kanals befindet sich in diesem Falle in einer vorteilhaften Ausgestaltung am oder angrenzend zum Rand des Hohlraums an der Stelle, die am weitesten von der Drehachse entfernt liegt. Wenn mehrere solcher Stellen vorhanden sind, wird eine Verteilung des Schmiermittels bewirkt. An jeder dieser Stellen kann sich eine Eintrittsöffnung einer der Kanäle befinden.

Insbesondere in diesem Fall kann der Hohlraum mindestens eine Schmiermitteldurchlassöffnung aufweisen, durch die während eines Betriebes des Getriebes Schmiermittel aus dem Hohlraum in eine Schmiermittelweiterleitung zu mindestens einer weiteren zu schmierenden Vorrichtung hindurchtritt. Bei der Schmiermittelweiterleitung handelt es sich nicht um einen Kanal durch das rotierbare Teil hindurch. Daher kann die weitere zu schmierende Vorrichtung ohne einen solchen Kanal mit Schmiermittel versorgt werden. Bei der weiteren zu schmierenden Vorrichtung kann es sich insbesondere um ein weiteres Drehlager handeln. Dieses Drehlager kann insbesondere zur Lagerung des rotierbaren Teils dienen.

Alternativ zu dem Hohlraum, der durch zumindest eine mit dem rotierbaren Teil mitrotierende Außenwand begrenzt wird, kann der Hohlraum innerhalb mindestens eines nicht rotierbaren, stillstehenden Teils ausgeformt sein, wobei der Hohlraum zur mitrotierenden Eintrittsöffnung des Kanals offen gestaltet ist, damit Schmiermittel vom Hohlraum in den Kanal gelangen kann. Hierbei wird es bevorzugt, dass der Boden des Hohlraums hoch genug liegt, damit sich am Boden sammelndes Schmiermittel in die Eintrittsöffnung des Kanals gelangen kann, sobald sie sich während der Rotation des rotierbaren Teils am unteren Bereich des Hohlraums befindet.

Hierin liegt der Vorteil, dass mithilfe des einen Hohlraums zwei zu schmierende Vorrichtungen mit Schmiermittel versorgt werden können. Das Prinzip kann auch auf mehr als zwei zu schmierende Vorrichtungen ausgedehnt werden.

In einer weiteren Ausgestaltung erfolgt die Schmierung der zu schmierenden Vorrichtung durch ein Schmiermittelleitungssystem, das aus einem oder mehreren Abschnitten besteht und von einer Versorgungseinrichtung, die auch den Hohlraum mit Schmiermittel versorgt, ausgeht. Das Schmiermittelleitungssystem kann zumindest einen Abschnitt aufweisen, der durch ein Gehäuse oder einen Gehäusedeckel geführt ist.

In einer vorteilhaften Ausgestaltung wird der Hohlraum durch mindestens ein weiteres Teil, das mit dem rotierbaren Teil mitrotieren kann oder feststeht, begrenzt, insbesondere durch mindestens eine Verteilerplatte, die zumindest eine Schmiermitteldurchlassöffnung aufweist, durch die während eines Betriebes des Getriebes Schmiermittel aus dem Hohlraum in die Schmiermittelweiterleitung zu der mindestens einen zu schmierenden Vorrichtung hindurchtritt. Wie bei der oben bereits erwähnten Schmiermittelweiterleitung wird das Schmiermittel nicht durch das rotierbare Teil hindurch weitergeleitet. Die Vorteile des weiteres Teils, das zumindest eine Schmiermitteldurchlassöffnung aufweist, liegen in einer einfachen und preisgünstigen Fertigungsmöglichkeit des Hohlraums und einer einfachen Möglichkeit, den Schmiermittelfluss durch die Eintrittsöffnung und durch die Schmiermitteldurchlassöffnung bezüglich der Schmiermittelförderraten abzustimmen. Eine solche Abstimmung ist insbesondere durch Wahl der Anzahl und Querschnittsgrößen der Schmiermitteldurchlassöffnungen in Abstimmung mit der mindestens einen Eintrittsöffnung des mindestens einen innerhalb des rotierbaren Teils befindlichen Kanals möglich.

In einer vorteilhafteten Ausgestaltung liegt die Auslassöffnung des Schmiermittelzulaufs zentrisch auf der Drehachse des rotierbaren Teils, sodass die Drehachse des rotierbaren Teils die Auslassöffnung durchstößt. Die Verteilerplatte rotiert mit dem rotierbaren Teil und weist eine (insbesondere kreisförmige, bezüglich der Drehachse konzentrische) Öffnung auf, durch die der Schmiermittelzulauf, z.B. ausgeführt als bezüglich der Drehachse zentrische Zulaufleitung, in den Hohlraum ragt, sodass Schmiermittel durch die Auslassöffnung in den Hohlraum gelangen kann. Der Abschnitt des Schmiermittelzulaufs, der sich in der Öffnung der rotierenden Verteilerplatte befindet, kann ebenfalls kreisrund sein. Die insbesondere kreisförmige, mitrotierende Öffnung der Verteilerplatte kann sich daher nahe an der feststehenden, kreisrunden Außenwand des Schmiermittelzulaufs befinden. Dies hat den Vorteil einer guten Abdichtung des Hohlraums an dieser Stelle. Auch der Einsatz eines Dichtungsrings, einer Labyrinthdichtung oder weiterer konstruktiver Vorrichtungen zur Abdichtung ist an dieser Stelle möglich.

In einer vorteilhaften Ausgestaltung kann das Getriebe ein Gehäuse aufweisen und sich vor der Auslassöffnung ein Abschnitt des Schmiermittelzulaufs befinden, der sich im Inneren eines Gehäusedeckels oder/und entlang einer in das Getriebeinnere weisenden inneren Oberfläche erstreckt. Vorteilhaft ist hierbei, dass Wärme von in dem Schmiermittelzulauf strömendem Schmiermittel in die Umgebung des Gehäuses abgegeben wird, wenn das Schmiermittel eine höhere Temperatur als die Umgebung hat. Warmes Schmiermittel kann daher gekühlt werden. Der Gehäusedeckel kann insbesondere angeflanscht sein.

In einer vorteilhaften Ausgestaltung kann das Getriebe ein Gehäuse aufweisen und sich die Schmiermittelweiterleitung im Inneren eines weiteren Gehäusedeckels oder/und entlang einer weiteren in das Getriebeinnere weisenden inneren Oberfläche erstrecken. Dadurch kann das in der Schmiermittelweiterleitung strömende Schmiermittel Wärme an die Umgebung des Gehäuses abgeben. Der weitere Gehäusedeckel kann insbesondere angeflanscht sein.

In einer vorteilhaften Ausgestaltung handelt es sich bei dem weiteren Gehäusedeckel um denselben Gehäusedeckel, in dessen Inneren sich der oben erwähnte Abschnitt des Schmiermittelzulaufs erstreckt.

Wie oben erwähnt, kann der Hohlraum mindestens einen radial nach außen verlaufenden Bereich aufweisen, der zu der Eintrittsöffnung des Kanals führt. Der Bereich kann insbesondere eine Nut, eine radiale Ausbuchtung, ein radial angeordneter Kurzkanal oder ein einem Zacken eines Sterns ähnlicher, sich radial nach außen verjüngender Bereich sein. Der radial nach außen verlaufende Bereich oder zumindest einer der radial nach außen verlaufenden Bereiche führt zu einer Eintrittsöffnung des Kanals. In einer Ausgestaltung weist der Hohlraum mindestens einen weiteren radial nach außen verlaufenden Bereich auf, der zu der oben beschriebenen Schmiermitteldurchlassöffnung führt.

In einer vorteilhaften Ausgestaltung ist eine gerade Anzahl nach außen verlaufender Bereiche des Hohlraums vorhanden, von denen z. B. jeder zweite nach außen verlaufende Bereiche zu einer Eintrittsöffnung eines in dem rotierbaren Teil angeordneten Kanals verläuft und jeder zweite nach außen verlaufenden Bereich zu einer der Schmiermitteldurchlassöffnungen führt. Insbesondere können die zu der Eintrittsöffnung führenden Bereiche und die zu den Schmiermitteldurchlassöffnungen führenden Bereiche jeweils paarweise spiegelsymmetrisch zu einer Symmetrieebene angeordnet sein, in der die Drehachse verläuft. Zum Beispiel können zwei der nach außen verlaufenden Bereiche jeweils zu einer Schmiermitteldurchlassöffnung der Verteilerplatte führen und zwei der nach außen verlaufenden Bereiche jeweils zu einer Kanal-Eintrittsöffnung führen. In dieser Ausgestaltung können in dem rotierbaren Teil zwei, bezüglich der Drehachse einander gegenüberliegende Kanäle vorhanden sein und in der Verteilerplatte zwei, bezüglich der Drehachse einander gegenüberliegende Schmiermitteldurchlassöffnungen vorhanden sein. Aufgrund der spiegelsymmetrischen Anordnung werden Unwuchten vermieden.

Ausführungsbeispiele der Erfindung werden nun unter Bezugnahme auf die beigefügte Zeichnung beschrieben. Die einzelnen Figuren der Zeichnung zeigen:
- Fig. 1: einen Längsschnitt durch einen Teilbereich eines Getriebes, wobei sich oben in Fig. 1 dargestellte Teile auch beim Betrieb des Getriebes oben befinden,
- Fig. 2: einen Längsschnitt durch den in Fig. 1 gezeigten Teilbereich, wobei die beiden Längsschnitte in senkrecht zu einander stehenden Ebenen verlaufen, die die Drehachse eines rotierbaren Teils des Getriebes, hier eines Zahnrades, als gemeinsame Schnittgerade aufweisen und wobei die Lage und Orientierung des Längsschnitts der Fig. 2 in Fig. 1 durch eine strichpunktierte Linie II-II bezeichnet ist,
- Fig. 3: einen Querschnitt durch den in Fig. 1 gezeigten Teilbereich, wobei die Lage und Orientierung des Querschnitts der Fig. 3 in Fig. 1 durch eine strichpunktierte Linie III-III bezeichnet ist,
- Fig. 4: einen Querschnitt durch den in Fig. 2 gezeigten Teilbereich, wobei die Lage und Orientierung des Querschnitts der Fig. 4 in Fig. 2 durch eine strichpunktierte Linie IV-IV bezeichnet ist.

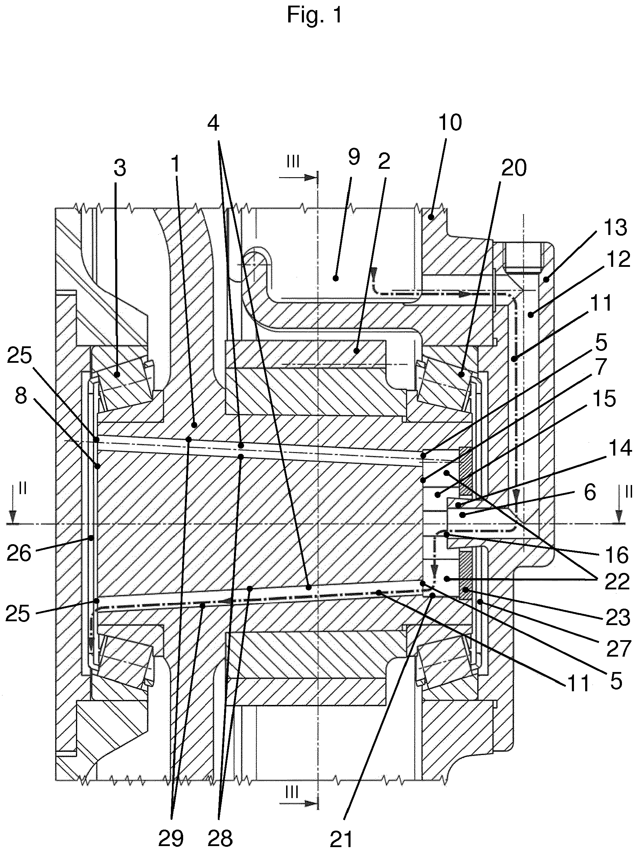

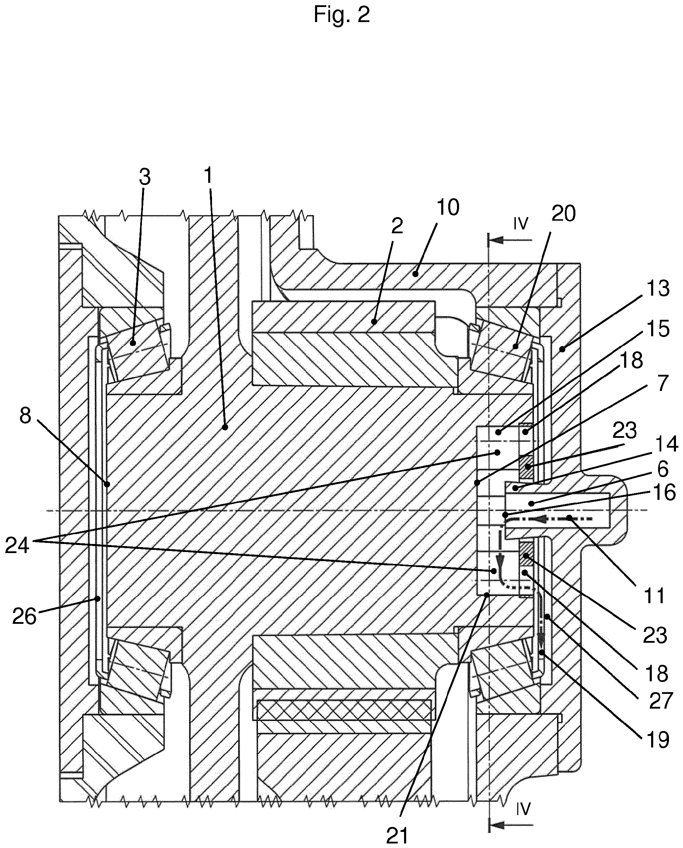

Fig. 1 zeigt einen Teilbereich eines Getriebes in einem Längsschnitt, der die Drehachse eines rotierbaren Teils 1 enthält. Das rotierbare Teil 1 ist ein Zahnrad mit einem Zahnkranz 2 als Kleinrad-Außenverzahnung. In Fig. 2 ist unten in der Figur ein Bereich eines weiteren Zahnrades dargestellt, dessen Außenverzahnung während eines Betriebes des Getriebes mit der Kleinrad-Außenverzahnung des rotierbaren Teils 1 kämmt.

Oben in Fig. 1 erstreckt sich ausgehend von dem Bezugszeichen 1 ein Bezugsstrich nach unten und durchquert dabei ein in Fig. 1 teilweise dargestelltes Großrad, welches von dem rotierbaren Teil 1 gebildet wird. Bei diesem rotierbaren Teil 1 handelt es sich lediglich um ein Beispiel für ein rotierbares Teil. Derartige Teile in Getrieben können auch anders ausgestaltet sein und dennoch zumindest einen erfindungsgemäßen Kanal zur Schmiermittelführung aufweisen.

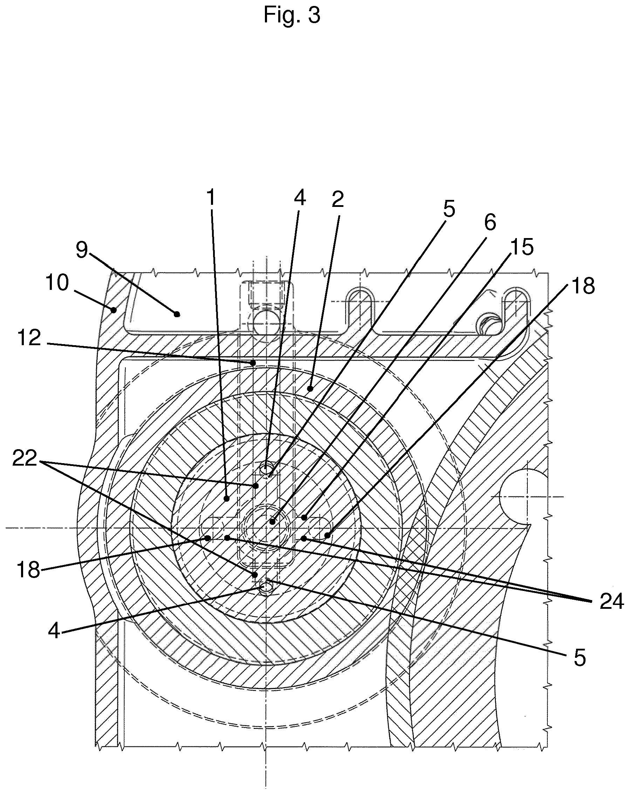

Wie aus den Fig. 1 und 3 zu erkennen ist, befindet sich oberhalb des Kleinrades eine Schmiermittelfangtasche 9, von der ausgehend ein Schmiermittelzulauf 6 zu einem Hohlraum 15 führt. Der Hohlraum 15 besitzt eine Außenwand 21, die innerhalb des rotierbaren Teils 1 ausgeformt ist. Die Außenwand 21 rotiert folglich mit dem rotierbaren Teil 1 mit. Ein Abschnitt 12 des Schmiermittelzulaufs 6 verläuft dabei in einem Gehäusedeckel 13 des Gehäuses 10. Der Schmiermittelzulauf 6 bildet in seinem Endbereich eine Zulaufleitung 14 in den Hohlraum 15. Die Zulaufleitung 14 ist bezüglich der Drehachse des rotierbaren Teils 1 zentrisch ausgebildet, das heißt sie ist rotationssymmetrisch zur Drehachse. Die Auslauföffnung 16 der Zulaufleitung 14 bzw. des Schmiermittelzulaufs 6 wird daher von der Drehachse durchstoßen, und zwar im Ausführungsbeispiel zentrisch durchstoßen, das heißt die kreisförmige Auslauföffnung 16 wird in ihrem Mittelpunkt von der Drehachse durchstoßen. Wie erwähnt fällt die Drehachse mit der gemeinsamen Schnittachse der Längsschnitte in Fig. 1 und Fig. 2 zusammen und ist in Fig. 1 daher mit II-II bezeichnet.

Aus Fig. 1 und Fig. 2 sind zwei Lager 3, 20 zur Lagerung der Drehbewegung des rotierbaren Teils 1 um die Drehachse erkennbar. Die Lager 3, 20 bilden lediglich in dem Ausführungsbeispiel eine Stützlagerung für das rotierbare Teil 1 in der Art einer X-Anordnung. Getriebe mit anderen Lagern können in entsprechender Weise durch Schmiermitteltransport teilweise durch zumindest einen Kanal durch das rotierbare Teil und teilweise entlang eines Gehäusedeckels oder durch eine andere Schmiermittelweiterleitung mit Schmiermittel versorgt werden.

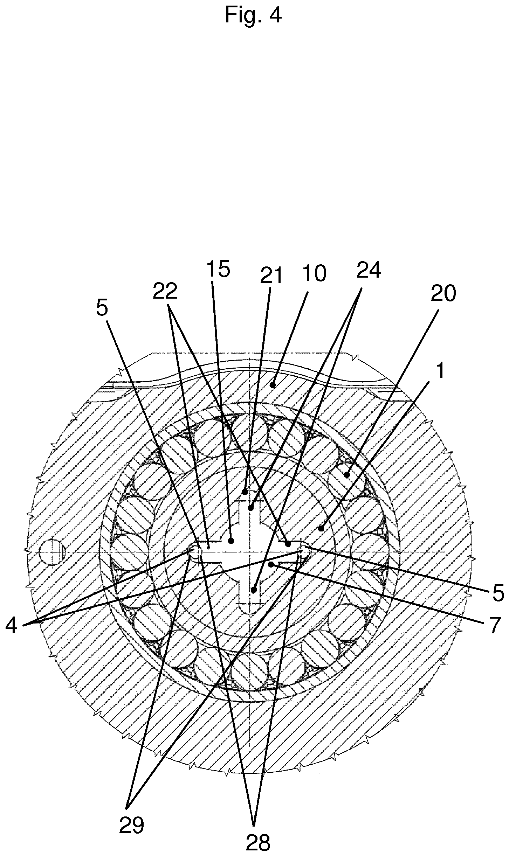

Wie aus Fig. 3 und Fig. 4 erkennbar ist, weist der Hohlraum 15 zwei erste radial nach außen verlaufende Bereiche 22 in Form von Nuten und zwei zweite radial nach außen verlaufenden Bereiche 24 ebenfalls in Form von Nuten auf. Die ersten radial nach außen verlaufenden Bereiche 22 führen zu jeweils einer Eintrittsöffnung 5 in einen Kanal 4 durch das rotierbare Teil 1 (siehe Fig. 1). Die beiden Eintrittsöffnungen 5 befinden sich an einer ersten Stirnfläche 7 des rotierbaren Teils 1. Im Ausführungsbeispiel sind die Kanäle 4 als Bohrungen mit kreisförmigem Querschnitt durch das rotierbare Teil 1 ausgeführt. Die Kanäle 4 enden jeweils an einer Austrittsöffnung 25, die sich an einer der ersten Stirnfläche 7 in axialer Richtung gegenüberliegenden zweiten Stirnfläche 8 des rotierbaren Teils 1 befindet. Die Austrittsöffnungen 25 münden in einen Freiraum 26, der sich zwischen der zweiten Stirnfläche 8 und einem schräg von rechts oben nach links unten schraffiert dargestellten Gehäuseteil befindet, bei dem es sich um einen weiteren Gehäusedeckel handeln kann.

Die Zulaufleitung 14 am Ende des Schmiermittelzulaufs 6 erstreckt sich durch eine kreisförmige Aussparung einer Verteilerplatte 23 hindurch in den Hohlraum 15 hinein. Die Zulaufleitung 14 bildet somit einen Abschnitt des Schmiermittelzulaufs 6, an dessen Ende sich die Auslauföffnung 16 befindet und der in den Hohlraum 15 hineinragt.

Wie gut aus Fig. 1 erkennbar ist, weist die Verteilerplatte 23 zwei Schmiermitteldurchlassöffnungen 18 auf, die bezüglich einer Spiegelebene, in der die Drehachse verläuft, spiegelsymmetrisch zueinander angeordnet sind. Die zweiten radial nach außen verlaufenden Bereiche 24 führen zu den Schmiermitteldurchlassöffnungen 18 (Fig. 2 und Fig. 3). Die Schmiermitteldurchlassöffnungen 18 bilden Auslauföffnungen für Schmiermittel aus dem Hohlraum 15 in eine Schmiermittelweiterleitung 27, die sich zwischen dem Gehäusedeckel 13 rechts in Fig. 1 und Fig. 2 einerseits und dem rotierbaren Teil 1 und dem rechts in Fig. 1 und Fig. 2 dargestellten Lager 20 andererseits erstreckt. Die Schmiermittelweiterleitung 27 ermöglicht die Zuführung von Schmiermittel zu dem Lager 20.

Während des Betriebes des Getriebes, wenn das rotierbare Teil 1 um die Drehachse dreht aber auch wenn das rotierbare Teil 1 nicht oder langsam um die Drehachse dreht, fließt Schmiermittel von der Schmiermittelfangtasche 9 in Schmiermittelflussrichtung 11 durch den Abschnitt 12 des Schmiermittelzulaufs 6, der durch den Gehäusedeckel 13 führt, durch die Zulaufleitung 14 und aus der Auslauföffnung 16 in den Hohlraum 15.

In dem in Fig. 1 dargestellten Zustand kann das Schmiermittel auch dann durch den unteren Kanal 4 durch das rotierbare Teil 1 hindurch in den Freiraum 26 und damit zu dem links in Fig. 1 und Fig. 2 dargestellten Lager 3 gelangen, wenn das rotierbare Teil 1 nicht um die Drehachse dreht. Während einer solchen Drehbewegung um die Drehachse jedoch gelangt das Schmiermittel aus dem Hohlraum 15 mit Unterstützung von Zentrifugalkräften über die ersten radial nach außen verlaufenden Bereiche 22 des Hohlraums 15 in beide Kanäle 4. Außerdem gelangt das Schmiermittel mit Unterstützung von Zentrifugalkräften durch beide Kanäle 4 hindurch in den Freiraum 26, wenn die Zentrifugalkräfte die Gewichtskräfte des Schmiermittels übersteigen. Da die zweite Stirnfläche 8 ebenfalls rotiert, unterstützen die Zentrifugalkräfte auch den Fluss des Schmiermittels von den Austrittsöffnungen 25 der Kanäle 4 zu dem Lager 3 links in Fig. 1 und Fig. 2. Der Freiraum 26 ist bevorzugt ein Freiraum, dessen ringförmiger, um die Drehachse herum verlaufender Bereich zwischen den Austrittsöffnungen 25 und dem Lager 3 keine Unterbrechung aufweist. Auf diese Weise wird Schmiermittel während der Drehbewegung des rotierbaren Teils 1 gleichmäßig zu allen Stellen neben dem Lager 3 geführt, die sich in Fig. 1 und Fig. 2 links des Lagers 3 befinden. Das Lager 3 wird somit gleichmäßig geschmiert.

Während der Drehbewegung des rotierbaren Teils 1 wird das Schmiermittel innerhalb der Kanäle 4 kontinuierlich über die gesamte Längserstreckung der Kanäle 4 mittels Unterstützung durch die Zentrifugalkräfte gefördert, da sich die Kanäle 4 über ihren gesamten Verlauf von der Eintrittsöffnung 5 zu der Austrittsöffnung 25 kontinuierlich von der Drehachse entfernen. Dementsprechend nimmt der Abstand jeweils des äußeren Randes 29 der Kanäle 4 zur Drehachse des rotierbaren Teils 1 linear zu. In dem konkreten Ausführungsbeispiel handelt es sich bei den Kanälen 4 um Bohrungen, die einen konstanten Querschnitt haben. Daher nimmt auch der Abstand jeweils des inneren Randes 28 der Kanäle 4 zur Drehachse des rotierbaren Teils 1 linear zu.

Während der Drehbewegung des rotierbaren Teils 1 gelangt Schmiermittel auch durch die in Fig. 2 und Fig. 3 dargestellten, zweiten radial nach außen verlaufenden Bereiche 24 nach außen und tritt dort durch die zwei Schmiermitteldurchlassöffnungen 18 in der Verteilerplatte 23 in die Schmiermittelweiterleitung 27 ein. Durch diese hindurch gelangt das Schmiermittel zu dem rechts in Fig. 1 und Fig. 2 dargestellten Lager 20. Zwar rotiert der Gehäusedeckel 13 nicht. Die mitrotierende Verteilerplatte 23 und, wie Fig. 2 zeigt, auch ein Oberflächenbereich des rotierbaren Teils 1 bilden jedoch ebenfalls einen Rand der Schmiermittelweiterleitung 27, so dass die Zentrifugalkräfte auch den Transport des Schmiermittels durch die Schmiermittelweiterleitung 27 zu dem Lager 20 unterstützen. Außer dem Transportweg 19 nach unten, der in Fig. 2 dargestellt ist, findet daher auch ein Schmiermitteltransport über die Schmiermittelweiterleitung 27 nach oben statt, wenn die Zentrifugalkräfte die Gewichtskräfte des Schmiermittels übersteigen.

Wie erwähnt betrifft das erfindungsgemäße Getriebe insbesondere den Fall der Tauschschmierung. Während der Drehbewegung des rotierbaren Teils 1 tropft daher Schmiermittel von dem Lager ab und gelangt entweder direkt oder indirekt über das rotierende Teil 1 und/oder weitere rotierende Teile in die Schmiermittelfangtasche 9, sodass ein Schmiermittelkreislauf realisiert ist.

### Bezugszeichenliste

- 1: rotierbares Teil
- 2: Zahnkranz
- 3, 20: Lager
- 4: Kanal
- 5: Eintrittsöffnung
- 6: Schmiermittelzulauf
- 7: erste Stirnfläche
- 8: zweite Stirnfläche
- 9: Schmiermittelfangtasche
- 10: Gehäuse
- 11: Schmiermittelflussrichtung
- 12: Abschnitt des Schmiermittelzulaufs
- 13: Gehäusedeckel
- 14: Zulaufleitung
- 15: Hohlraum
- 16: Auslauföffnung
- 18: Schmiermitteldurchlassöffnung
- 19: Transportweg
- 21: Außenwand
- 22: erster radial nach außen verlaufender Bereich (zum Kanal)
- 23: Verteilerplatte
- 24: zweiter radial nach außen verlaufender Bereich (zur Weiterleitung)
- 25: Austrittsöffnung
- 26: Freiraum
- 27: Schmiermittelweiterleitung
- 28: innerer Rand
- 29: äußerer Rand

## Patentansprüche

1. Getriebe, insbesondere zur Verwendung in einem Antriebsstrang eines Schienenfahrzeugs, mit einem um eine Drehachse rotierbaren Teil (1), wobei innerhalb des rotierbaren Teils (1) mindestens ein Kanal (4) mit einer Eintrittsöffnung (5) für einen Eintritt von Schmiermittel in den Kanal (4) und mit einer Austrittsöffnung (25) für einen Austritt des Schmiermittels aus dem Kanal (4) verläuft, wobei betrachtet in einem Längsschnitt durch das rotierbare Teil, der die Drehachse enthält, zumindest ein Längsabschnitt des Kanals (4) einen bezüglich der Drehachse in radialer Richtung näher an der Drehachse verlaufenden inneren Rand (28) und einen in größerem Abstand zu der Drehachse verlaufenden äußeren Rand (29) aufweist und wobei sich im Verlauf des zumindest einen Längsabschnitts in Richtung der Austrittsöffnung (25) der äußere Rand (29) weiter von der Drehachse entfernt,
wobei das Getriebe ein Drehlager (3) zum Lagern des rotierbaren Teils (1) und einen Freiraum (26) aufweist, wobei sich der Freiraum (26) von der Austrittsöffnung (25) zu dem Drehlager (3) erstreckt,
wobei der Kanal (4) von einer ersten radialen Stirnfläche (7) bis zu einer zweiten, in axialer Richtung der ersten Stirnfläche gegenüberliegenden radialen Stirnfläche (8) des rotierbaren Teils (1) verläuft, wobei sich die Eintrittsöffnung an der ersten Stirnfläche (7) und die Austrittsöffnung (25) an der zweiten Stirnfläche (8) befindet, und **dadurch gekennzeichnet, dass** das Getriebe einen ortsfesten Schmiermittelzulauf (6) aufweist, der zu einem Hohlraum (15) führt, wobei der Hohlraum (15) in Flussrichtung des Schmiermittels unmittelbar vor der Eintrittsöffnung (5) des Kanals (4) angeordnet ist,
wobei das Getriebe ein Gehäuse (10) mit einem Gehäusedeckel (13) aufweist und wobei sich zumindest ein Abschnitt (12) des Schmiermittelzulaufs (6) im Inneren des Gehäusedeckels (13) oder entlang einer in das Getriebeinnere weisenden inneren Oberfläche erstreckt.

2. Getriebe nach Anspruch 1, wobei die Austrittsöffnung (25) in radialer Richtung näher an der Drehachse angeordnet ist als ein zu schmierender Bereich des Drehlagers und wobei sich der Freiraum (26) ausgehend von der Austrittsöffnung (25) weg von der Drehachse in Richtung des Drehlagers (3) erstreckt.

3. Getriebe nach Anspruch 1 oder 2, wobei sich der Längsabschnitt, in dessen Verlauf in Richtung der Austrittsöffnung (25) sich der äußere Rand (29) weiter von der Drehachse entfernt, von der Eintrittsöffnung bis zur Austrittsöffnung (25) erstreckt.

4. Getriebe nach einem der Ansprüche 1-3, wobei sich der äußere Rand (29) im Verlauf des Längsabschnitts in Richtung der Austrittsöffnung (25) in keinem Teil des Längsabschnitts wieder der Drehachse annähert.

5. Getriebe nach einem der Ansprüche 1-4, wobei sich der äußere Rand (29) im Verlauf des Längsabschnitts in Richtung der Austrittsöffnung (25) kontinuierlich weiter von der Drehachse entfernt.

6. Getriebe nach einem der Ansprüche 1-5, wobei der Schmiermittelzulauf (6) eine Auslauföffnung (16) aufweist, wobei ein Abschnitt des Schmiermittelzulaufs (6), an dessen Ende sich die Auslauföffnung (16) befindet, in den Hohlraum (15) hineinragt.

7. Getriebe nach einem der Ansprüche 1-6, wobei eine Außenwand (21), die eine Außenumfangsfläche des Hohlraums (15) bildet, während einer Drehung des rotierbaren Teils (4) um die Drehachse mitrotiert.

8. Getriebe nach Anspruch 7, wobei der Hohlraum (15) mindestens einen radial nach außen verlaufenden Bereich (22) aufweist, der zu der Eintrittsöffnung (5) des Kanals (4) führt.

9. Getriebe nach einem der Ansprüche 1-8, wobei der Hohlraum (15) mindestens eine Schmiermitteldurchlassöffnung (18) aufweist, durch die während eines Betriebes des Getriebes Schmiermittel aus dem Hohlraum (15) in eine Schmiermittelweiterleitung (27) zu mindestens einer zu schmierenden Vorrichtung hindurchtritt.

10. Schienenfahrzeug mit einem Getriebe nach einem der Ansprüche 1-9, wobei das Getriebe in einem Antriebsstrang des Schienenfahrzeugs angeordnet ist, so dass von einem Antriebsmotor des Schienenfahrzeugs Antriebskraft über das Getriebe auf zumindest ein angetriebenes Rad des Schienenfahrzeugs übertragbar ist.

11. Verfahren zum Herstellen eines Getriebes, insbesondere eines Getriebes zur Verwendung in einem Antriebsstrang eines Schienenfahrzeugs, wobei ein rotierbares Teil (1) bereitgestellt wird und um eine Drehachse rotierbar ausgestaltet wird, wobei innerhalb des rotierbaren Teils (1) mindestens ein Kanal (4) mit einer Eintrittsöffnung (5) für einen Eintritt von Schmiermittel in den Kanal (4) und mit einer Austrittsöffnung (25) für einen Austritt des Schmiermittels aus dem Kanal (4) verläuft, wobei betrachtet in einem Längsschnitt durch das rotierbare Teil, der die Drehachse enthält, zumindest ein Längsabschnitt des Kanals (4) einen bezüglich der Drehachse in radialer Richtung näher an der Drehachse verlaufenden inneren Rand (28) und einen in größerem Abstand zu der Drehachse verlaufenden äußeren Rand (29) aufweist und wobei sich im Verlauf des zumindest einen Längsabschnitts in Richtung der Austrittsöffnung (25) der äußere Rand (29) weiter von der Drehachse entfernt,
wobei das Getriebe mit einem Drehlager (3) zum Lagern des rotierbaren Teils (1) und einem Freiraum (26) versehen wird, wobei sich der Freiraum (26) von der Austrittsöffnung (25) zu dem Drehlager (3) erstreckt,
wobei der Kanal (4) von einer ersten radialen Stirnfläche (7) bis zu einer zweiten, in axialer Richtung der ersten Stirnfläche gegenüberliegenden radialen Stirnfläche (8) des rotierbaren Teils (1) ausgeführt wird, wobei sich die Eintrittsöffnung (5) an der ersten Stirnfläche (7) und die Austrittsöffnung (25) an der zweiten Stirnfläche (8) befindet, und **dadurch gekennzeichnet, dass**
das Getriebe mit einem ortsfesten Schmiermittelzulauf (6) ausgestaltet wird, der zu einem Hohlraum (15) führt, wobei der Hohlraum (15) in Flussrichtung des Schmiermittels unmittelbar vor der Eintrittsöffnung (5) des Kanals (4) angeordnet wird,
wobei das Getriebe mit einem Gehäuse (10) mit einem Gehäusedeckel (13) ausgestattet wird und wobei sich zumindest ein Abschnitt (12) des Schmiermittelzulaufs (6) im Inneren des Gehäusedeckels (13) oder entlang einer in das Getriebeinnere weisenden inneren Oberfläche erstreckt.

## Claims

1. A transmission, in particular for use in a powertrain of a rail vehicle, comprising a part (1) which is rotatable about a rotation axis, at least one duct (4) extending within the rotatable part (1) and having an inlet opening (5) to allow lubricant to enter the duct (4) and an outlet opening (25) to allow lubricant to exit the duct (4), as viewed in a longitudinal sectional view through the rotatable part which contains the rotation axis, at least one longitudinal section of the duct (4) including an inner edge (28), which extends closer to the rotation axis in the radial direction with respect to the rotation axis, and an outer edge (29), which extends at a greater distance from the rotation axis, and the outer edge (29) extending further away from the rotation axis in the course of the at least one longitudinal section in the direction of the outlet opening (25),
the transmission comprising a pivot bearing (3) for supporting the rotatable part (1) and a clearance (26), the clearance (26) extending from the outlet opening (25) to the pivot bearing (3),
the duct (4) extending from a first radial end face (7) to a second radial end face (8) of the rotatable part (1) which is located opposite the first end face in the axial direction, the inlet opening being situated at the first end face (7), and the outlet opening (25) being situated at the second end face (8),
**characterized in that**
the transmission includes a stationary lubricant feed (6), which leads to a cavity (15), the cavity (15) being arranged directly upstream of the inlet opening (5) of the duct (4) in the flow direction of the lubricant,
the transmission comprises a housing (10) including a housing cover (13), and at least one section (12) of the lubricant feed (6) extending inside the housing cover (13) or along an inner surface pointing into the transmission interior.

2. The transmission according to claim 1, wherein the outlet opening (25), in the radial direction, is arranged closer to the rotation axis than an area of the pivot to be lubricated, the clearance (26), proceeding from the outlet opening (25), extending away from the rotation axis in the direction of the pivot bearing (3).

3. The transmission according to claim 1 or 2, wherein the longitudinal section, in the course of which the outer edge (29) extends further away from the rotation axis in the direction of the outlet opening (25), extends from the inlet opening to the outlet opening (25).

4. The transmission according to any one of claims 1 to 3, wherein the outer edge (29), in the course of the longitudinal section in the direction of the outlet opening (25), does not approach the rotation axis again in any portion of the longitudinal section.

5. The transmission according to any one of claims 1 to 4, wherein the outer edge (29), in the course of the at least one longitudinal section in the direction of the outlet opening (25), extends continuously away from the rotation axis again .

6. The transmission according to any one of claims 1 to 5, wherein the lubricant feed (6) includes a drain opening (16), a section of the lubricant feed (6), at the end of which the drain opening (16) is situated, protruding into the cavity (15).

7. The transmission according to any one of claims 1 to 6, wherein an outer wall (21), which forms an outer circumferential surface of the cavity (15), co-rotates during a rotation of the rotatable part (4) about the rotation axis.

8. The transmission according to claim 7, wherein the cavity (15) includes at least one radially outwardly extending area (22), which leads to the inlet opening (5) of the duct (4).

9. The transmission according to any one of claims 1 to 8, wherein the cavity (15) includes at least one lubricant through-opening (18), through which, during operation of the transmission, lubricant passes from the cavity (15) into a lubricant forwarding line (27) to at least one device to be lubricated.

10. A rail vehicle, comprising a transmission according to any one of claims 1 to 9, wherein the transmission is arranged in a powertrain of the rail vehicle so that, from a driving motor of the rail vehicle, a driving force can be transmitted via the transmission to at least one driven wheel of the rail vehicle.

11. A method for producing a transmission, in particular for use in a powertrain of a rail vehicle, wherein a rotatable part (1) is provided and configured so as to be rotatable about a rotation axis, at least one duct (4) extending within the rotatable part (1) and having an inlet opening (5) to allow lubricant to enter the duct (4) and an outlet opening (25) to allow lubricant to exit the duct (4), as viewed in a longitudinal sectional view through the rotatable part which contains the rotation axis, at least one longitudinal section of the duct (4) including an inner edge (28), which extends closer to the rotation axis in the radial direction with respect to the rotation axis, and an outer edge (29), which extends at a greater distance from the rotation axis, and the outer edge (29) extending further away from the rotation axis in the course of the at least one longitudinal section in the direction of the outlet opening (25),
wherein the transmission is provided with a pivot bearing (3) for supporting the rotatable part and a clearance (26), the clearance (26) extending from the outlet opening (25) to the pivot bearing (3),
wherein the duct (4) is designed from a first radial end face (7) to a second radial end face (8) of the rotatable part (1) which is located opposite the first end face in the axial direction, the inlet opening (5) being situated at the first end face (7), and the outlet opening (25) being situated at the second end face (8),
and **characterized in that** the transmission is configured with a stationary lubricant feed (6), which leads to a cavity (15), the cavity (15) being arranged directly upstream of the inlet opening (5) of the duct (4) in the flow direction of the lubricant,
wherein the transmission is configured with a housing (10) including a housing cover (13), and at least one section (12) of the lubricant feed (6) extending inside the housing cover (13) or along an inner surface pointing into the transmission interior.

## Revendications

1. Transmission, en particulier pour une chaîne cinématique d'un véhicule ferroviaire, avec une partie (1) pouvant tourner autour d'un axe de rotation, dans laquelle au moins un canal (4) avec une ouverture d'entrée (5) pour une entrée de lubrifiant dans le canal (4) et avec une ouverture de sortie (25) pour une sortie du lubrifiant du canal (4) s'étend à l'intérieur de la partie (1) pouvant tourner, dans laquelle, considérée dans une coupe longitudinale à travers la partie pouvant tourner, qui contient l'axe de rotation, au moins une section longitudinale du canal (4) présente un bord intérieur (28) s'étendant plus près de l'axe de rotation par rapport à l'axe de rotation dans la direction radiale et un bord extérieur (29) s'étendant à une plus grande distance par rapport à l'axe de rotation et dans laquelle dans le tracé de l'au moins une section longitudinale en direction de l'ouverture de sortie (25) le bord extérieur (29) s'éloigne davantage de l'axe de rotation,
dans laquelle la transmission présente un palier rotatif (3) pour le montage de la partie (1) pouvant tourner et un espace libre (26), dans laquelle l'espace libre (26) s'étend de l'ouverture de sortie (25) au palier rotatif (3),
dans laquelle le canal (4) s'étend d'une première surface frontale (7) radiale à une deuxième surface frontale (8) radiale de la partie (1) pouvant tourner opposée dans la direction axiale à la première surface frontale, dans laquelle l'ouverture d'entrée se trouve sur la première surface frontale (7) et l'ouverture de sortie (25) sur la deuxième surface frontale (8),
et **caractérisée en ce que**
la transmission présente une alimentation en lubrifiant (6) fixe, qui mène à une cavité (15), dans laquelle la cavité (15) est disposée dans la direction de flux du lubrifiant directement devant l'ouverture d'entrée (5) du canal (4),
dans laquelle la transmission présente un carter (10) avec un couvercle de carter (13) et dans laquelle au moins une section (12) de l'alimentation en lubrifiant (6) s'étend à l'intérieur du couvercle de carter (13) ou le long d'une surface intérieure orientée vers l'intérieur de la transmission.

2. Transmission selon la revendication 1, dans laquelle l'ouverture de sortie (25) est disposée dans la direction radiale plus près de l'axe de rotation qu'une zone à lubrifier du palier rotatif et dans laquelle l'espace libre (26) s'étend à partir de l'ouverture de sortie (25) à l'écart de l'axe de rotation en direction du palier rotatif (3) .

3. Transmission selon la revendication 1 ou 2, dans laquelle la section longitudinale, dans le tracé de laquelle en direction de l'ouverture de sortie (25) le bord extérieur (29) s'éloigne davantage de l'axe de rotation, s'étend de l'ouverture d'entrée à l'ouverture de sortie (25).

4. Transmission selon l'une quelconque des revendications 1-3, dans laquelle le bord extérieur (29) dans le tracé de la section longitudinale en direction de l'ouverture de sortie (25) ne se rapproche à nouveau pas de l'axe de rotation en aucune partie de la section longitudinale.

5. Transmission selon l'une quelconque des revendications 1-4, dans laquelle le bord extérieur (29) dans le tracé de la section longitudinale en direction de l'ouverture de sortie (25) s'éloigne davantage de l'axe de rotation de manière continue.

6. Transmission selon l'une quelconque des revendications 1-5, dans laquelle l'alimentation en lubrifiant (6) présente une ouverture de sortie (16), dans laquelle une section de l'alimentation en lubrifiant (6), à l'extrémité de laquelle se trouve l'ouverture de sortie (16), fait saillie à l'intérieur de la cavité (15).

7. Transmission selon l'une quelconque des revendications 1-6, dans laquelle une paroi extérieure (21), qui forme une surface périphérique extérieure de la cavité (15), tourne conjointement autour de l'axe de rotation pendant une rotation de la partie (4) pouvant tourner.

8. Transmission selon la revendication 7, dans laquelle la cavité (15) présente au moins une zone (22) s'étendant radialement vers l'extérieur, qui mène à l'ouverture d'entrée (5) du canal (4).

9. Transmission selon l'une quelconque des revendications 1-8, dans laquelle la cavité (15) présente au moins une ouverture de passage de lubrifiant (18), par laquelle pendant un fonctionnement de la transmission du lubrifiant passe à partir de la cavité (15) dans une conduite de transfert de lubrifiant (27) vers au moins un dispositif à lubrifier.

10. Véhicule ferroviaire avec une transmission selon l'une quelconque des revendications 1-9, dans lequel la transmission est disposée dans une chaîne cinématique du véhicule ferroviaire, de sorte qu'une force d'entraînement peut être transmise par un moteur d'entraînement du véhicule ferroviaire par l'intermédiaire de la transmission sur au moins une roue entraînée du véhicule ferroviaire.

11. Procédé pour fabriquer une transmission, en particulier une transmission destinée à être utilisée dans une chaîne cinématique d'un véhicule ferroviaire, dans lequel une partie (1) pouvant tourner est fournie et est conçue pour pouvoir tourner autour d'un axe de rotation, dans lequel au moins un canal (4) avec une ouverture d'entrée (5) pour une entrée de lubrifiant dans le canal (4) et avec une ouverture de sortie (25) pour une sortie du lubrifiant du canal (4) s'étend à l'intérieur de la partie (1) pouvant tourner, dans lequel, considérée dans une coupe longitudinale à travers la partie pouvant tourner, qui contient l'axe de rotation, au moins une section longitudinale du canal (4) présente un bord intérieur (28) s'étendant plus près de l'axe de rotation par rapport à l'axe de rotation dans la direction radiale et un bord extérieur (29) s'étendant à une plus grande distance par rapport à l'axe de rotation et dans lequel dans le tracé de l'au moins une section longitudinale en direction de l'ouverture de sortie (25) le bord extérieur (29) s'éloigne davantage de l'axe de rotation,
dans lequel la transmission est pourvue d'un palier rotatif (3) pour le montage de la partie (1) pouvant tourner et d'un espace libre (26), dans lequel l'espace libre (26) s'étend de l'ouverture de sortie (25) au palier rotatif (3),
dans lequel le canal (4) est réalisé d'une première surface frontale (7) radiale à une deuxième surface frontale (8) radiale de la partie (1) pouvant tourner opposée dans la direction axiale à la première surface frontale, dans lequel l'ouverture d'entrée (5) se trouve sur la première surface frontale (7) et l'ouverture de sortie (25) sur la deuxième surface frontale (8),
et **caractérisé en ce que**
la transmission est conçue avec une alimentation en lubrifiant (6) fixe, qui mène à une cavité (15), dans lequel la cavité (15) est disposée dans la direction de flux du lubrifiant directement devant l'ouverture d'entrée (5) du canal (4),
dans lequel la transmission est équipée d'un carter (10) avec un couvercle de carter (13) et dans lequel au moins une section (12) de l'alimentation en lubrifiant (6) s'étend à l'intérieur du couvercle de carter (13) ou le long d'une surface intérieure orientée vers l'intérieur de la transmission.
